# EUROPÄISCHE PATENTSCHRIFT

(11) **EP 2 468 442 B1**
(45) Veröffentlichungstag und Bekanntmachung des Hinweises auf die Patenterteilung: **19.07.2017**
(21) Anmeldenummer: 11193647.2
(22) Anmeldetag: 15.12.2011
(51) Int. Cl.: B23H 9/14, B24B 1/00, B23P 13/02

(54) **Verfahren zum Herstellen von Bohrungen**
Method for producing boreholes
Procédé de fabrication de forages

(30) Priorität: 21.12.2010 DE 102010063721; 13.01.2011 DE 102011002658
(43) Veröffentlichungstag der Anmeldung: 27.06.2012
(73) Patentinhaber: Robert Bosch GmbH, 70442 Stuttgart (DE)
(72) Erfinder: Schoepf, Martin, 70499 Stuttgart (DE); Kiesel, Rainer, 71263 Weil Der Stadt (DE); Hlavac, Marcus, 70327 Stuttgart-Untertuerkheim (DE)

(56) Entgegenhaltungen:
- EP-A2- 1 535 688
- WO-A1-2012/000720
- DE-A1-102004 019 543
- DE-A1-102005 034 940
- DE-B3-102004 054 587
- US-A1- 2009 120 411

## Beschreibung

### Stand der Technik

Die Erfindung betrifft ein Verfahren zum Herstellen von Bohrungen, insbesondere von Präzisionsbohrungen. Speziell betrifft die Erfindung die Herstellung von hochpräzisen Führungsbohrungen mit hoher Maß- und Formgenauigkeit, die beispielsweise in der Einspritztechnik, insbesondere bei Brennstoffeinspritzventilen, und der Ventiltechnik zum Einsatz kommen können.

Die Herstellung von hochpräzisen Führungsbohrungen erfolgt im letzten Bearbeitungsschritt durch mechanische Bearbeitungsverfahren, wie zum Beispiel Schleifen oder Honen. Durch die vorausgegangenen Bearbeitungsschritte, insbesondere durch Weichbearbeitungen, wie beispielsweise Bohren, oder eine Wärmebehandlung, weisen die Führungsbohrungen zu diesem Zeitpunkt in der Regel eine erhebliche Abweichung vom Endmaß und der Endform auf. Durch den letzten mechanischen Bearbeitungsschritt, das heißt durch das Schleifen oder Honen, sollen diese Abweichungen idealerweise korrigiert werden. Auf Grund von verfahrensbedingten Nachteilen, wie beispielsweise Prozesskräften, die zu einer Ausrichtung der Werkzeuge führen, ist eine Formkorrektur nur im eingeschränkten Maße und gegebenenfalls nur durch eine mechanische Bearbeitung mit geringen Materialabtragungsraten zur Reduzierung der verfahrensbedingten Nachteile möglich. Dies betrifft speziell Bohrungen mit sehr kleinen Durchmessern, beispielsweise von weniger als zwei Millimeter. Falls das gewünschte Ergebnis durch die mechanische Bearbeitung mit geringer Materialabtragsrate möglich ist, dann führt auch dies zu hohen Prozesszeiten und damit zu hohen Herstellungskosten.

Aus der DE 10 2004 019 543 A1 ist eine Vorrichtung zum Herstellen einer Durchgangsbohrung in einem Werkstück bekannt. Die Vorrichtung weist eine Elektrode auf. Der Austritt der Elektrode aus der Durchgangsbohrung lässt sich mittels eines Sensors erfassen, der ein entsprechendes Signal an der Steuereinrichtung der Vorrichtung erzeugt. Nach dem Durchbruch der Elektrode führt diese einen definierten Vorschub aus, so dass sich unabhängig von Bauteiletoleranzen stets dieselben Austrittsgeometrien an der Durchgangsbohrung erzeugen lassen.

### Offenbarung der Erfindung

Das erfindungsgemäße Verfahren zum Herstellen von Bohrungen mit den Merkmalen des Anspruchs 1 hat den Vorteil, dass der Herstellungsprozess optimiert ist. Speziell ist eine hochpräzise und qualitativ hochwertige Herstellung von Bohrungen möglich, wobei auch bei geringen Durchmessern eine wirtschaftliche Herstellung möglich ist.

Durch die in den Unteransprüchen aufgeführten Maßnahmen sind vorteilhafte Weiterbildungen des im Anspruch 1 angegebenen Verfahrens möglich.

In vorteilhafter Weise besteht die Prozessfolge aus dem elektrisch abtragenden Bearbeitungsverfahren und der nachgeordneten mechanischen Honbearbeitung. Durch das elektrisch abtragende Bearbeitungsverfahren erfolgt hierbei gezielt eine kraftfreie Formkorrektur. Durch die nachgeordnete mechanische Honbearbeitung kann die Ausgestaltung des exakten Maßes und der gewünschten Oberflächenqualität der Bohrung erfolgen. Durch die gezielte Verfahrensabfolge und durch die aufeinander abgestimmten Bearbeitungsprozesse können Bohrungen, insbesondere Führungsbohrungen, hinsichtlich der Maßgenauigkeit und der Formgenauigkeit deutlich verbessert gefertigt werden.

Außerdem ist besonders bei Bohrungen mit kleinen Durchmessern, insbesondere mit Durchmessern von weniger als 2 mm, eine Reduzierung der Gesamtbearbeitungszeit möglich.

In vorteilhafter Weise ist als elektrisch abtragendes Bearbeitungsverfahren ein ECM Verfahren, ein EDM-Verfahren oder ein ECDM-Verfahren gewählt. ECM bedeutet elektrochemisches Abtragen (Elysieren). EDM bedeutet elektro-erosives Abtragen (Funkenerosion). ECDM bedeutet elektrochemisch-erosives Abtragen.

In vorteilhafter Weise ist eine Trennung des Bearbeitungsschwerpunkts, der Formkorrektur und des Bearbeitungsschwerpunkts der Endmaß- und Oberflächenqualität bei der Endbearbeitung von Bohrungen durch die gezielte Nutzung von einzelnen Verfahrensvorteilen bezogen auf den jeweiligen Bearbeitungsschwerpunkt möglich. Dabei ist eine Formkorrektur durch das elektrisch abtragende Bearbeitungsverfahren kraftfrei und somit hochpräzise möglich. Anschließend werden das Endmaß und die Oberflächenqualität durch den mechanischen Bearbeitungsprozess, beispielsweise Honen, hochpräzise und qualitativ hochwertig hergestellt.

Durch diese Abfolge und durch die gezielte Nutzung von einzelnen Verfahrensvorteilen bezogen auf den jeweiligen Bearbeitungsschwerpunkt ist eine Steigerung der Bearbeitungsgenauigkeit und eine Reduzierung der Gesamtbearbeitungszeit bei der Endbearbeitung von Bohrungen, insbesondere Führungsbohrungen, möglich. Speziell betrifft dies Bohrungen mit kleinen Durchmessern, die kleiner als 2 mm sein können.

Das mechanische Bearbeiten der mit dem elektrisch abtragenden Bearbeitungsverfahren bearbeiteten Bohrung erfolgt somit in vorteilhafter Weise durch Honen der mit dem elektrisch abtragenden Bearbeitungsverfahren bearbeiteten Bohrung. Durch die Bearbeitung der Bohrung mit dem elektrisch abtragenden Bearbeitungsverfahren erfolgt eine Formkorrektur, bei der innerhalb einer vorgegebenen Idealkontur liegende Vorsprünge der Kontur der Bohrung durch elektrisches Abtragen zumindest im Wesentlichen entfernt werden. Innerhalb der vorgegebenen Idealkontur liegende Vorsprünge würden bei der nachfolgenden mechanischen Bearbeitung Kräfte auf das Werkzeug, insbesondere eine Honahle, ausüben. Hierdurch kann es beispielsweise zu einer Verbiegung der Honahle kommen, was sich in einer Formungenauigkeit und Beeinträchtigung der Oberflächengüte auswirkt. Durch die Abtragung der Vorsprünge, die innerhalb der vorgegebenen Idealkontur liegen, werden beispielsweise solche unerwünschten, auf das Werkzeug zur mechanischen Bearbeitung wirkenden Kräfte zumindest verringert. Hierdurch können die gewünschte Formgenauigkeit und Oberflächengüte durch die mechanische Bearbeitung erzielt werden. Das Bearbeiten der Bohrung mit dem elektrisch abtragenden Bearbeitungsverfahren erfolgt mittels einer Werkzeugelektrode und eine Längsachse der Werkzeugelektrode wird bei der Bearbeitung der Bohrung zumindest näherungsweise parallel zu einer Sollachse der Bohrung orientiert. Da das elektrisch abtragende Bearbeitungsverfahren eine kraftfreie Formkorrektur ermöglicht, kann innerhalb gewisser Grenzen eine beliebige Wahl der Längsachse der Werkzeugelektrode bezüglich der Bohrung erfolgen. Die Werkzeugelektrode wird mit geeigneten Abmessungen, insbesondere einem geeigneten Durchmesser, gewählt, so dass beim Ausrichten der Werkzeugelektrode an der Sollachse der Bohrung keine Berührung mit dem Werkstück, in dem die Bohrung ausgestaltet ist, das heißt der Bohrungswand, erfolgt. Da die Intensität des elektrischen Abtragens von der lokalen Spaltbreite zwischen der Werkzeugelektrode und dem Werkstück abhängt, ergibt sich durch die Ausrichtung der Längsachse der Werkzeugelektrode an der Sollachse der Bohrung eine Vergleichmäßigung der Bohrung entlang der Längsachse der Werkzeugelektrode. Der Begriff der parallelen Orientierung der Längsachse der Werkzeugelektrode zu der Sollachse der Bohrung schließt hierbei eine koaxiale Orientierung ein, bei der die Längsachse der Werkzeugelektrode und die Sollachse der Bohrung aufeinander liegen und somit identisch sind.

Vorteilhaft ist es, dass die Längsachse der Werkzeugelektrode bei der Bearbeitung der Bohrung zumindest zeitweise auf der Sollachse der Bohrung liegt. Speziell bei dieser Anordnung der Werkzeugelektrode ist es vorteilhaft, dass die Werkzeugelektrode bei der Bearbeitung der Bohrung zumindest zeitweise entlang ihrer Längsachse in die Bohrung hineingeführt wird und/oder dass die Werkzeugelektrode bei der Bearbeitung der Bohrung zumindest zeitweise entlang ihrer Längsachse aus der Bohrung herausgeführt wird und/oder dass die Werkzeugelektrode bei der Bearbeitung der Bohrung zumindest zeitweise durch die Bohrung hindurchgeführt ist und in zumindest einer Richtung entlang ihrer Längsachse relativ zu der Bohrung verfahren wird. Hierbei ist es möglich, dass die Werkzeugelektrode bei der Bearbeitung der Bohrung auf einer festen Längsachse angeordnet bleibt, wobei ein Vorschub der Werkzeugelektrode entlang der Längsachse erfolgt. Die Zuführung des Arbeitsmediums kann hierbei von einer Seite erfolgen, von der auch die Werkzeugelektrode zugeführt wird, oder von der anderen Seite. Die Zuführung des Arbeitsmediums kann auch im Bad erfolgen. Durch die Bewegung der Werkzeugselektrode kann das elektrochemische Abtragen zur Formkorrektur vorteilhaft beeinflusst werden.

Vorteilhaft ist es auch, dass die Werkzeugelektrode bei der Bearbeitung der Bohrung relativ zu der Bohrung zumindest näherungsweise ruht. Hierbei ist es ferner vorteilhaft, dass die Werkzeugselektrode bei der Bearbeitung der Bohrung mit einer oszillierenden Bewegung entlang der Sollachse betätigt wird. Die oszillierende Bewegung kann beispielsweise durch Ultraschall erzeugt werden. Hierdurch ist ohne ein Verfahren der Werkzeugelektrode ein vorteilhafte Beeinflussung des elektrischen Abtragens möglich.

Vorteilhaft ist es auch, dass die Werkzeugelektrode bei der Bearbeitung der Bohrung mit einer Kreisbewegung um die Sollachse der Bohrung bewegt wird. Zusätzlich oder alternativ ist es von Vorteil, dass die Werkzeugelektrode bei der Bearbeitung der Bohrung zumindest zeitweise in und/oder entgegen einer radialen Richtung senkrecht zu der Sollachse bewegt wird. Hierdurch kann das elektrochemische Abtragen mehr oder weniger lokalisiert werden, um in Bezug auf den jeweiligen Anwendungsfall eine Vergleichsmäßigung der Bohrung in Bezug auf die Sollachse zu erzielen.

Vorteilhaft ist es auch, dass die Werkzeugelektrode als Pfeilelektrode ausgestaltet ist. Hierdurch kann das elektrochemische Abtragen im Zeitverlauf lokal bezüglich der Längsachse der Werkzeugelektrode erfolgen.

Vorteilhaft ist es auch, dass zumindest ein Bearbeitungsabschnitt der Werkzeugelektrode, der bei der Bearbeitung in die Bohrung geführt wird, als zylinderförmiger Bearbeitungsabschnitt ausgestaltet ist und dass ein Durchmesser des zylinderförmigen Bearbeitungsabschnitts so groß ausgewählt wird, dass sich der Bearbeitungsabschnitt der Werkzeugselektrode berührungslos in die Bohrung einführen lässt. Hierbei kann der Durchmesser des zylinderförmigen Bearbeitungsabschnitts speziell möglichst groß gewählt sein. Durch diese Ausgestaltung kann entlang der Sollachse eine Vergleichmäßigung erfolgen, während entsprechend dem gewählten Durchmesser durch paralleles, aber nicht koaxiales Ausrichten der Längsachse der Werkzeugelektrode eine radial selektive Abtragung möglich ist. Durch Bewegen der Werkzeugselektrode entlang einer Kreisbahn kann hierbei eine Vergleichmäßigung der Bohrung in Bezug auf die Sollachse erzielt werden. Auch andere Bewegungen der Werkzeugelektrode sind möglich.

### Kurze Beschreibung der Zeichnungen

Bevorzugte Ausführungsbeispiele der Erfindung sind in der nachfolgenden Beschreibung unter Bezugnahme auf die beigefügten Zeichnungen, in denen sich entsprechende Elemente mit übereinstimmenden Bezugszeichen versehen sind, näher erläutert. Es zeigt:
Fig. 1 eine Werkzeugelektrode und ein Werkstück in einer schematischen, auszugsweisen Schnittdarstellung zur Erläuterung eines Verfahrens zum Herstellen von Bohrungen entsprechend einer ersten Ausführungsform der Erfindung;
Fig. 2 eine Werkzeugselektrode und ein Werkstück in einer schematischen, auszugsweisen Schnittdarstellung zur Erläuterung eines Verfahrens zum Herstellen von Bohrungen entsprechend einer zweiten Ausführungsform der Erfindung;
Fig. 3 eine Werkzeugselektrode und ein Werkstück in einer schematischen, auszugsweisen Schnittdarstellung zur Erläuterung eines Verfahrens zum Herstellen von Bohrungen entsprechend einer dritten Ausführungsform der Erfindung;
Fig. 4 eine Werkzeugselektrode und ein Werkstück in einer schematischen, auszugsweisen Schnittdarstellung zur Erläuterung eines Verfahrens zum Herstellen von Bohrungen entsprechend einer vierten Ausführungsform der Erfindung;
Fig. 5 eine Werkzeugselektrode und ein Werkstück in einer schematischen, auszugsweisen Schnittdarstellung zur Erläuterung eines Verfahrens zum Herstellen von Bohrungen entsprechend einer fünften Ausführungsform der Erfindung;
Fig. 6 eine Werkzeugselektrode und ein Werkstück in einer schematischen, auszugsweisen Schnittdarstellung zur Erläuterung eines Verfahrens zum Herstellen von Bohrungen entsprechend einer sechsten Ausführungsform der Erfindung;
Fig. 7 einen Schnitt durch die in Fig. 6 dargestellte Werkzeugelektrode und das Werkstück entlang der mit VII bezeichneten Schnittlinie zur Erläuterung des Verfahrens entsprechend der sechsten Ausführungsform;
Fig. 8 eine Werkzeugelektrode und ein Werkstück in einer schematischen, auszugsweisen Schnittdarstellung zur Erläuterung eines Verfahrens zum Herstellen von Bohrungen entsprechend einer siebten Ausführungsform der Erfindung und
Fig. 9 einen Schnitt durch die in Fig. 8 dargestellte Werkzeugelektrode und das Werkstück entlang der mit IX bezeichneten Schnittlinie zur Erläuterung des Verfahrens entsprechend der siebten Ausführungsform.

### Ausführungsformen der Erfindung

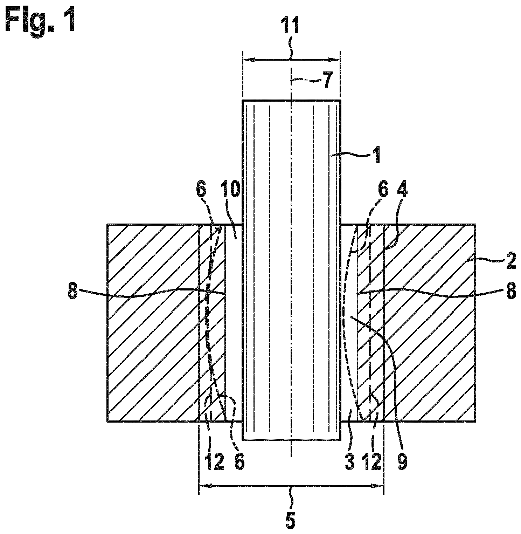

Fig. 1 zeigt eine Werkzeugelektrode und ein Werkstück 2 mit einer Bohrung 3 in einer schematischen, auszugsweisen Schnittdarstellung zur Erläuterung eines Verfahrens zum Herstellen von Bohrungen entsprechend einer ersten Ausführungsform der Erfindung. Die gewünschte Kontur einer Bohrung 4, insbesondere Präzisionsbohrung 4, die aus der Bohrung 3 entsteht, weist einen Durchmesser 5 auf. Die Ausgestaltung der Bohrung 4 mit dem Durchmesser 5 erfolgt durch mehrere Verfahrensschritte. Speziell kann die Bohrung 4 als hochpräzise Führungsbohrung mit hoher Maß- und Formgenauigkeit dienen. Mögliche Anwendungen sind hierbei die Einspritztechnik oder die Ventiltechnik. Das Werkstück 2 kann hierbei ein Bauteil oder Gehäuseteil eines Einspritzventils oder einer anderen Komponente eines Einspritzsystems sein. Hierbei können in einem Werkstück 2 auch mehrere Bohrungen 4 ausgestaltet werden. Bei der Ausführung der einzelnen Verfahrensschritte ist auch eine parallele Bearbeitung mehrerer Bohrungen 3 eines oder mehrerer Werkstücke 2 möglich.

In einem ersten Verfahrensschritt wird auf herkömmliche Weise eine Bohrung 6 in dem Werkstück 2 durch eine spanabhebende Bearbeitung erzeugt. Idealerweise sollte die Bohrung 6 bezüglich einer Sollachse 7 eine zylindermantelförmige Idealkontur 8 aufweisen. Die zerspanende Bearbeitung erfolgt jedoch unter dem Einfluss von Kräften, die in der Praxis die Bohrung 6 mit einer Realkontur 6 erzeugen. Diese Realkontur 6 weist beispielsweise einen Vorsprung 9 auf, der sich als bauchförmige Erhebung zwischen der Realkontur 6 und der Idealkontur 8 ergibt. Eine Längsachse der Bohrung 6 kann hierbei auch von der Sollachse 7 abweichen.

Nach der zerspanenden Bearbeitung des Werkstücks 2 wird die Bohrung 6 mit einem elektrisch abtragenden Bearbeitungsverfahren bearbeitet. Hierfür wird die Werkzeugelektrode 1 in die Bohrung 6 eingebracht. Zwischen der Werkzeugelektrode 1 und der momentanen Bohrung 3, das heißt der Realkontur 6, besteht ein Arbeitsspalt (Spalt) 10. Ein Durchmesser 11, der in diesem Ausführungsbeispiel zylinderförmigen Werkzeugelektrode 1 ist hierbei so gewählt, dass kein Kontakt zwischen der Werkzeugelektrode 1 und der Bohrung 6 besteht.

Durch den Spalt 10 wird ein Arbeitsmedium für das elektrisch abtragende Bearbeitungsverfahren geführt. Dies kann auch in einem Bad erfolgen.

Das elektrisch abtragende Bearbeitungsverfahren bearbeitet die Bohrung 3 ausgehend von der im ersten Schritt erzeugten Realkontur 6, wobei Vorsprünge 9 zumindest im Wesentlichen entfernt werden. Hierdurch ergibt sich die Bohrung 3 mit der Formkorrektur 12. Somit hat die Bohrung 3 nach dem elektrisch abtragenden Behandlungsverfahren die Ausgestaltung der dargestellten Bohrung (Formkorrektur) 12.

Da Vorsprünge 9 entfernt sind, kann ausgehend von der Bohrung 12 eine mechanische Bearbeitung der mit dem elektrisch abtragenden Bearbeitungsverfahren bearbeiteten Bohrung 3 erfolgen. Insbesondere kann eine mechanische Bearbeitung durch Honen erfolgen. Hierbei kann das mechanische Bearbeiten präzise durchgeführt werden, so dass sich die Präzisionsbohrung 4 ergibt. Die Präzisionsbohrung 4 weist eine Längsachse auf, die zumindest weitgehend mit der Sollachse 7 übereinstimmt. Außerdem ist der Durchmesser 5 der Präzisionsbohrung 4 zumindest weitgehend konstant. Ferner ergibt sich eine zumindest weitgehend zylindermantelförmige Ausgestaltung der Präzisionsbohrung 4.

Somit kann durch das elektrisch abtragende Bearbeitungsverfahren die Voraussetzung für den nächsten Verfahrensschritt, nämlich die mechanische Bearbeitung, geschaffen werden, indem eine Formkorrektur der Bohrung 3 mit der Realkontur 6 erfolgt. Durch das elektrisch abtragende Bearbeitungsverfahren wird die Bohrung 3 dann so weit abgetragen, dass diese mit der Formkorrektur 12 ausgestaltet ist. Durch die mechanische Endbearbeitung kann dann die gewünschte Formgenauigkeit und Oberflächengüte erzielt werden, so dass aus der Bohrung 3 die Präzisionsbohrung 4 ausgestaltet wird.

Durch das elektrisch abtragende Bearbeitungsverfahren, das thermisch und anodisch erfolgen kann, kann die Ist-Geometrie der Bohrung 3, die die Realkontur 6 aufweist, an die Soll-Geometrie der Bohrung 3, die die Idealkontur 8 aufweist, angeglichen werden. Speziell kann hierbei ein Bohrungsverzug der Bohrung 3 korrigiert werden. Hierbei kann auch ein Verzug nach einer Wärmebehandlung korrigiert werden. Somit wird die nachfolgende mechanische Bearbeitung mit einem mechanischen Bearbeitungswerkzeug, insbesondere einem Honwerkzeug, wie beispielsweise einer Honahle, durch Vorsprünge 9 nicht gestört, da diese entfernt sind. Insbesondere bei Mikrogeometrien und/oder unsymmetrisch konstruierten Werkstücken 2 beziehungsweise Bauteilen ist die Kombination aus dem elektrisch abtragenden Bearbeitungsverfahren und dem mechanischen Endbearbeiten von Vorteil.

Bei der Ausführung des elektrisch abtragenden Bearbeitungsverfahrens sind unterschiedliche Ausführungsformen möglich, die einzeln oder in Kombination ausgeführt werden können.

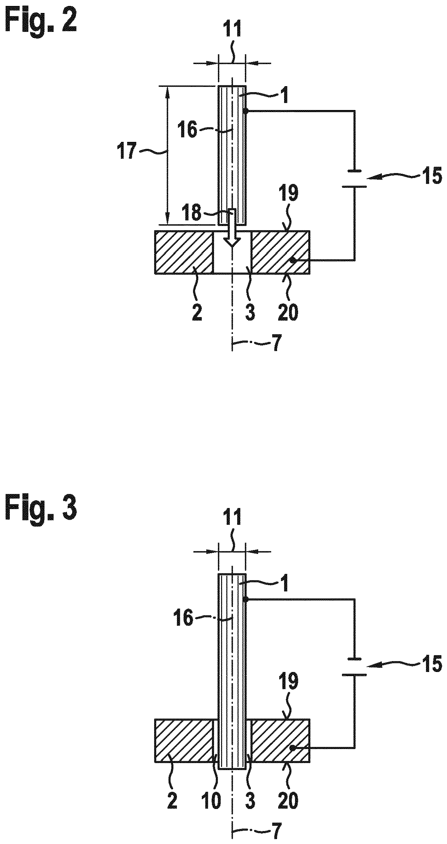

Fig. 2 zeigt die Werkzeugelektrode 1 und das Werkstück 2 in einer schematischen, auszugsweisen Schnittdarstellung zur Erläuterung des Verfahrens zum Herstellen von Präzisionsbohrungen 4 entsprechend einer zweiten Ausführungsform der Erfindung. Bei der Durchführung des elektrisch abtragenden Bearbeitungsverfahrens wird eine Spannungsquelle 15 genutzt. Hierbei ist die Werkzeugelektrode 1 mit der Kathode der Spannungsquelle 15 verbunden, während das Werkstück 2 mit der Anode der Spannungsquelle 15 verbunden ist. Über die Spannungsquelle 15 wird eine Spannung zwischen die Werkzeugelektrode 1 und das Werkstück 2 angelegt, so dass das elektrisch abtragende Bearbeitungsverfahren in Gang gesetzt ist. In dieser Ausführungsform des Verfahrens liegt eine Längsachse 16 der Werkzeugelektrode 1 auf der Sollachse 7 der Bohrung 3. Somit steht die Längsachse 16 der Werkzeugelektrode 1 koaxial zur Sollachse 7 der Bohrung 3 des Werkstücks 2. Hierbei ist ein Abschnitt 17 der Werkzeugelektrode 1 dargestellt, in dem die Werkzeugelektrode 1 zylinderförmig ausgestaltet ist. Der Abschnitt 17 der Werkzeugelektrode 1 befindet sich zunächst außerhalb der Bohrung 3 des Werkstücks 2. Dann wird die Werkzeugelektrode 1 in einer Richtung 18 entlang der Sollachse 7 beziehungsweise der Längsachse 16 in die Bohrung 3 hineingeführt. Hierbei kann die Werkzeugelektrode 1 auch durch die Bohrung 6 geführt werden. In diesem Ausführungsbeispiel wird die Werkzeugelektrode 1 von einer Seite 19 des Werkstücks 2, auf der sich im Ausgangszustand die Werkzeugelektrode 1 befindet, in die Bohrung 3 hineingeführt. Ferner ist eine weitere Seite 20 des Werkstücks 2 dargestellt, die von der Seite 19 abgewandt ist. Wenn die Werkzeugelektrode 1 durch die Bohrung 3 geführt wird, dann tritt der Abschnitt 17 der Werkzeugelektrode 1 teilweise an der Seite 20 aus der Bohrung 3 heraus. Während des Verfahrens kann die Werkzeugelektrode 1 mit konstantem Vorschub in beziehungsweise durch die Bohrung 3 geführt werden. Das Verfahren kann auch abstandsgeregelt durchgeführt werden.

Die Werkzeugelektrode 1 kann bei der Durchführung des Verfahrens relativ zu dem Werkstück 2 bezüglich der Längsachse 16 rotieren. Hierbei können die Werkzeugelektrode 1 und/oder das Werkstück 2 um die Sollachse 7 rotieren. Wenn sowohl die Werkzeugelektrode 1 als auch das Werkstück 2 rotieren, dann sind sowohl ein Gleichlauf als auch ein Gegenlauf möglich. Möglich ist es auch, dass die Werkzeugelektrode 1 um die Sollachse 7 rotiert, während das Werkstück 2 nicht rotiert. Ferner ist es möglich, dass das Werkstück 2 um die Sollachse 7 rotiert, während die Werkzeugelektrode 1 nicht rotiert. Außerdem kann auch die Relativbewegung der Werkzeugelektrode 1 zu dem Werkstück 2 entlang der Längsachse 16 durch Bewegen der Werkzeugelektrode 1 und/oder durch Bewegen des Werkstücks 2 erfolgen.

Die Zuführung des Arbeitsmediums kann von der Seite 19 aus in die Bohrung 3, von der Seite 20 aus in die Bohrung 3 oder auch im Bad erfolgen. Ferner kann das Arbeitsmedium auch durch die Werkzeugelektrode 1 zugeführt werden.

Fig. 3 zeigt die Werkzeugelektrode 1 und das Werkstück 2 in einer schematischen, auszugsweisen Schnittdarstellung zur Erläuterung des Verfahrens zum Herstellen von Präzisionsbohrungen 4 entsprechend einer dritten Ausführungsform der Erfindung. In diesem Ausführungsbeispiel steht die Werkzeugelektrode 1 relativ zu dem Werkstück 2, wenn die von der Spannungsquelle 15 erzeugte Spannung zwischen die Werkzeugelektrode und das Werkstück 2 angelegt ist. Hierbei steht die Längsachse 16 der zylinderförmigen Werkzeugelektrode 1 koaxial zur Sollachse 7 der Bohrung 3. Die Werkzeugelektrode 1 ist hierbei durch die Bohrung 3 geführt und ragt an der Seite 20 aus der Bohrung 3. Der Durchmesser 11 der Werkzeugelektrode 1 ist hierbei so groß wie möglich gewählt, ohne dass die Werkzeugelektrode 1 die vorbearbeitete Bohrung 3, die Vorsprünge 9 aufweisen kann, berührt. Während des elektrischen Abtragens wird die Werkzeugelektrode 1 nicht verfahren. Möglich ist es hierbei auch, dass die Werkzeugelektrode 1 während des elektrischen Abtragens entlang ihrer Längsachse 16 in Oszillation versetzt wird, beispielsweise durch Ultraschall. Ferner sind weitere Variationen möglich, zum Beispiel Rotationen der Werkzeugelektrode 1 relativ zu dem Werkstück 2 um die Sollachse 7.

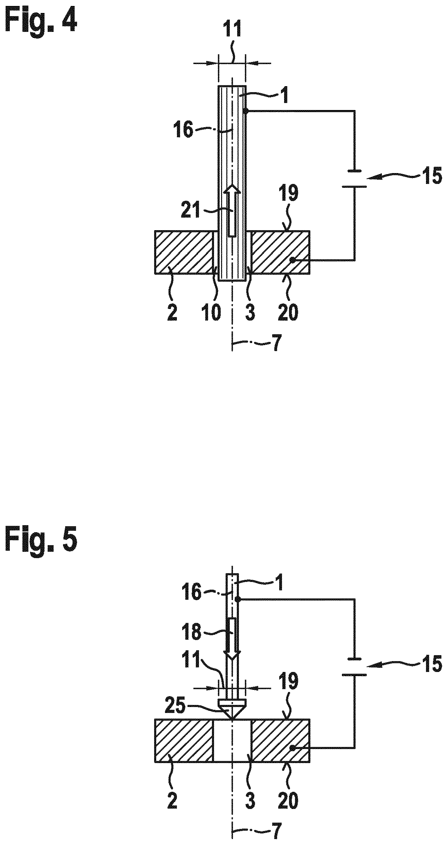

Fig. 4 zeigt die Werkzeugelektrode 1 und das Werkstück 2 in einer schematischen, auszugsweisen Schnittdarstellung zur Erläuterung des Verfahrens zum Herstellen von Präzisionsbohrungen 4 entsprechend einer vierten Ausführungsform der Erfindung. Die Längsachse 16 der zylinderförmigen Werkzeugelektrode 1 steht hierbei koaxial zur Sollachse 7 der Bohrung 3. Hierbei taucht die Werkzeugelektrode 1 in die vorbearbeitete Bohrung 3 ein. Vorzugsweise ist die Werkzeugelektrode 1 durch die Bohrung 3 hindurchgeführt, wobei die Werkzeugelektrode 1 an der Seite 20 aus der Bohrung 3 ragt. Der Durchmesser 11 der Werkzeugelektrode 1 ist so groß wie möglich gewählt, ohne dass die Werkzeugelektrode 1 das Werkstück 2 berührt. Während des Verfahrens, wenn eine Spannung zwischen die Werkzeugelektrode 1 und das Werkstück 2 angelegt ist, dann wird die Werkzeugelektrode 1 entlang ihrer Längsachse 16 beziehungsweise entlang der Sollachse 7 aus der Bohrung 3 des Werkstücks 2 herausgeführt. Hierfür wird die Werkzeugelektrode 1 in einer Richtung 21 bewegt. Hierbei kann die Bewegung mit einem konstanten Vorschub erfolgen. Die Bewegung kann auch abstandsgeregelt erfolgen. Hierbei sind geeignete Variationen des Verfahrens möglich. Insbesondere kann die Werkzeugelektrode 1 relativ zu dem Werkzeug 2 bezüglich der Sollachse 7 rotieren.

Fig. 5 zeigt die Werkzeugelektrode 1 und das Werkstück 2 in einer schematischen, auszugsweisen Schnittdarstellung zur Erläuterung des Verfahrens zum Herstellen von Präzisionsbohrungen 4 entsprechend einer fünften Ausführungsform der Erfindung. Die Werkzeugelektrode 1 ist mit ihrer Längsachse 16 koaxial auf der Sollachse 7 angeordnet. Die Werkzeugelektrode 1 ist als Pfeilelektrode 1 ausgestaltet. Hierbei weist die Pfeilelektrode 1 einen Kopf 25 auf, der zumindest abschnittsweise kegelförmig ausgestaltet ist. Die Werkzeugelektrode 1 wird mit dem Kopf 25 voran von der Seite 19 in die Bohrung 3 geführt. Hierbei wird die Werkzeugelektrode 1 in der Richtung 18 bewegt, wenn die Spannung der Spannungsquelle 15 zwischen die Werkzeugelektrode 1 und das Werkstück 2 angelegt ist. Durch den Einsatz der als Pfeilelektrode 1 ausgestalteten Werkzeugelektrode 1 können prozessbedingte Konizitäten bei dem elektrisch abtragenden Bearbeitungsverfahren vermieden werden. Die Bearbeitung kann hierbei mit konstantem Vorschub erfolgen. Dies gilt speziell für das ECM-Verfahren. Bei einem ECDM-Verfahren kann ein konstanter Vorschub oder eine Abstandsregelung erfolgen.

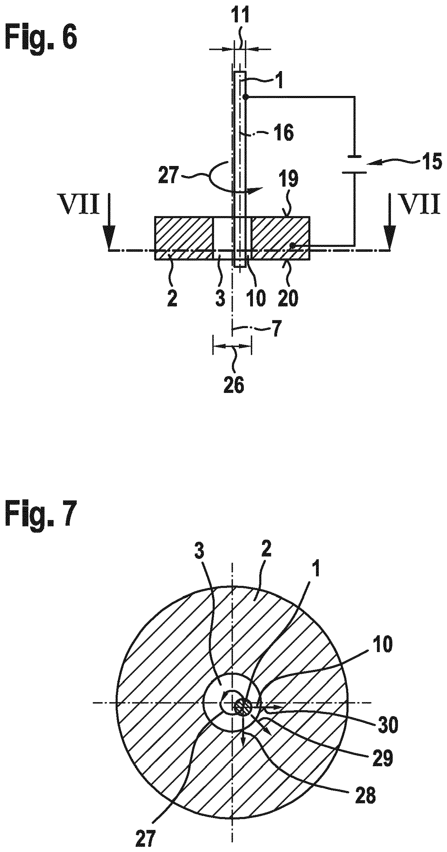

Fig. 6 zeigt die Werkzeugelektrode 1 und das Werkstück 2 in einer schematischen, auszugsweisen Schnittdarstellung zur Erläuterung des Verfahrens zum Herstellen von Präzisionsbohrungen 4 entsprechend einer sechsten Ausführungsform. Die Werkzeugelektrode 1 ist durch die Bohrung 3 geführt, wobei die Werkzeugelektrode 1 an der Seite 20 aus der Bohrung 3 ragt. Der Durchmesser 11 der Werkzeugelektrode 1 ist deutlich kleiner gewählt als ein Durchmesser 26 der zumindest näherungsweise zylinderförmigen Bohrung 3. Die Längsachse 16 der Werkzeugelektrode 1 ist parallel zu der Sollachse 7 orientiert. Hierbei ist die Längsachse 16 zu der Sollachse 7 versetzt. Somit steht die Längsachse 16 der Werkzeugelektrode 1 radial versetzt zur Sollachse 7 der Bohrung 3. Zwischen der Werkzeugelektrode 1 und dem Werkstück 2 ist ein Spalt 10 gebildet, der als Arbeitsspalt 10 dient. Während des Verfahrens wird die Werkzeugselektrode 1 um die Sollachse 7 entsprechend einer Kreisbewegung 27 bewegt.

Bei gegebenem Versatz der Längsachse 16 bezüglich der Sollachse 7 ist der Durchmesser 11 so groß wie möglich gewählt, ohne dass die Werkzeugelektrode 1 das Werkstück 2 berührt. Dies ist gleichbedeutend damit, dass bei gegebenem Durchmesser 11 der Werkzeugelektrode 1 der Versatz zwischen der Längsachse 16 und der Sollachse 7 möglichst groß gewählt wird, ohne dass während der Kreisbewegung 27 eine Berührung zwischen der Werkzeugelektrode 1 und dem Werkstück 2 erfolgt. Speziell beim ECM-Verfahren kann eine konstante Kreisbewegung 27 erfolgen. Beim EDM-Verfahren oder ECDM-Verfahren kann die Bewegung mit konstanter Kreisbewegung 27 oder abstandsgeregelt erfolgen. Möglich ist es auch, dass die Kreisbewegung 27 mehrfach durchgeführt wird, wobei die Werkzeugelektrode 1 nach einer wählbaren Anzahl von Durchläufen oder kontinuierlich radial weiter von der Sollachse 7 der Bohrung 3 weg verstellt wird.

Die Ausführung des Verfahrens bietet hierbei mehrere Variationsmöglichkeiten. Zwischen der Werkzeugelektrode 1 und dem Werkstück 2 kann keine zusätzliche Rotation vorgesehen sein. Möglich ist es auch, dass die Werkzeugelektrode 1 während der Kreisbewegung 27 um ihre Längsachse 16 rotiert, während das Werkstück 2 um die Sollachse 7 rotiert. Gleichlauf und Gegenlauf sind hierbei möglich. Möglich ist es auch, dass die Werkzeugelektrode 1 um ihre Längsachse 16 rotiert, während das Werkstück 2 nicht rotiert. Das Werkstück 2 kann auch um die Sollachse 7 rotieren, während die Werkzeugelektrode 1 keine zusätzliche Rotation hat. Die unterschiedlichen Rotationen können hierbei im Gleichlauf und Gegenlauf zur Kreisbewegung 27 der Werkzeugelektrode 1 erfolgen.

Fig. 7 zeigt einen Schnitt durch die in Fig. 6 dargestellte Werkzeugelektrode 1 und das Werkstück 2 entlang der mit VII bezeichneten Schnittlinie zur Erläuterung des Verfahrens entsprechend der sechsten Ausführungsform. Hierbei ist die Kreisbewegung 27 der Werkzeugelektrode 1 veranschaulicht. Optional können auch Bewegungen 28, 29, 30 der Werkzeugelektrode 1 ausgeführt werden.

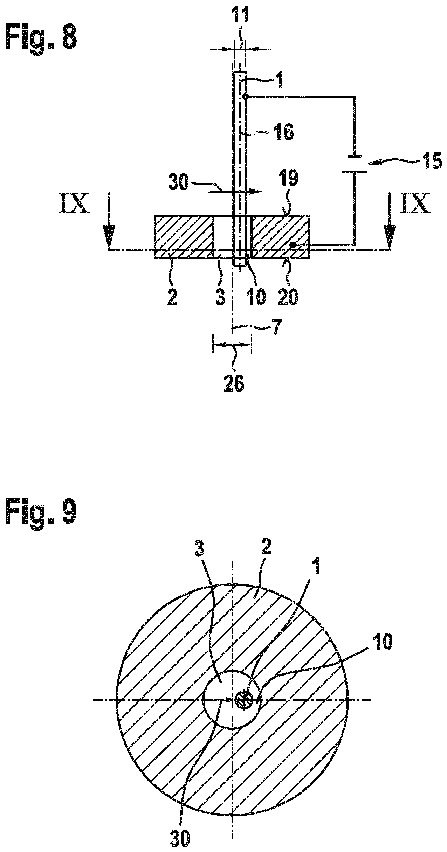

Fig. 8 zeigt die Werkzeugelektrode 1 und das Werkstück 2 in einer schematischen, auszugsweisen Schnittdarstellung zur Erläuterung des Verfahrens zum Herstellen von Präzisionsbohrungen 4 entsprechend einer siebten Ausführungsform. Der Durchmesser 11 der Werkzeugelektrode 1 ist hierbei kleiner als der Durchmesser 26 der näherungsweise zylinderförmigen Bohrung 3 ausgestaltet. Hierbei wird die Werkzeugelektrode 1 translatorisch in einer Bewegungsrichtung 30 bewegt. Die Bewegungsrichtung 30 kann hierbei variieren. Vorzugsweise rotiert hierbei das Werkstück 2 um die Sollachse 7. Die Längsachse 16 der Werkzeugelektrode 1 steht radial versetzt zur Sollachse 7. Die Werkzeugelektrode 1 ragt hierbei durch die Bohrung 3. Der Durchmesser 11 der Werkzeugelektrode 1 ist wiederum so groß gewählt, dass keine Berührung mit dem Werkstück 2 auftritt. Durch die Drehung des Werkstücks 2 um die Sollachse 7 erfolgt eine umfängliche Bearbeitung der Bohrung 3, um die Formkorrektur 12 zu erzielen.

Während des Verfahrens kann die Werkzeugelektrode 1 radial in der Bewegungsrichtung 30 weiter von der Sollachse 7 der Bohrung 3 weg bewegt werden. Möglich ist es auch, dass keine weitere Bewegung während des Verfahrens erfolgt, indem bereits bei Prozessbeginn der notwendige Arbeitsspalt 10 richtig eingestellt wird. Speziell beim ECM-Verfahren erfolgt ein konstanter Vorschub. Speziell beim EDM-Verfahren oder ECDM-Verfahren kann mit konstantem Vorschub oder abstandsgeregelt eine Bearbeitung erfolgen.

Die beschriebenen Ausführungsformen können einzeln oder auch in beliebigen Kombinationen zur Bearbeitung des Werkstücks 2 kombiniert werden, um die Präzisionsbohrung 4 auszubilden.

Das anhand der Fig. 2 beschriebene elektrisch abtragende Bearbeitungsverfahren der zweiten Ausführungsform eignet sich besonders in einer Ausgestaltung als EDM-Verfahren oder ECDM-Verfahren.

Das anhand der Fig. 3 beschriebene elektrisch abtragende Bearbeitungsverfahren der dritten Ausführungsform eignet sich besonders in einer Ausgestaltung als EDM-Verfahren, ECM-Verfahren oder ECDM-Verfahren.

Das anhand der Fig. 4 beschriebene elektrisch abtragende Bearbeitungsverfahren der vierten Ausführungsform ist vorzugsweise als EDM-Verfahren oder ECDM-Verfahren ausgeführt.

Das anhand der Fig. 5 beschriebene elektrisch abtragende Bearbeitungsverfahren der fünften Ausführungsform ist vorzugsweise als ECM-VERfahren oder ECDM-Verfahren ausgeführt.

Das anhand der Fig. 6 und 7 beschriebene elektrisch abtragende Bearbeitungsverfahren der siebten Ausführungsform eignet sich besonders als EDM-Verfahren, ECM-Verfahren oder ECDM-Verfahren.

Das anhand der Fig. 8 und 9 beschriebene elektrisch abtragende Bearbeitungsverfahren der siebten Ausführungsform eignet sich besonders in einer Ausgestaltung als EDM-Verfahren, ECM-Verfahren oder ECDM-Verfahren.

Nach dem elektrisch abtragenden Bearbeitungsverfahren schließt sich vorzugsweise direkt eine mechanische Bearbeitung an, um die mit dem elektrisch abtragenden Bearbeitungsverfahren bearbeitete Bohrung 3, bei der Vorsprünge 9 zumindest im Wesentlichen entfernt sind, der Endbearbeitung zur Präzisionsbohrung 4 zu unterziehen. Dieses mechanische Bearbeiten erfolgt vorzugsweise durch Honen.

Die Erfindung ist nicht auf die beschriebenen Ausführungsbeispiele beschränkt.

## Patentansprüche

1. Verfahren zum Herstellen von hochpräzisen Führungsbohrungen (4) mit einer vorgegebenen Idealkontur (8) und einer Sollachse (7), das folgende Bearbeitungsschritte aufweist:
Erzeugen einer Bohrung (3) in einem Werkstück (2) durch eine spanabhebende Bearbeitung, wobei die Bohrung (3) eine Realkontur (6) mit mindestens einem Vorsprung (9) innerhalb der vorgegebenen Idealkontur (8) und eine Längsachse umfasst, die von der Sollachse (7) abweicht,
Bearbeiten der Bohrung (3) mit einem elektrisch abtragenden Bearbeitungsverfahren, wobei der mindestens eine innerhalb der vorgegebenen Idealkontur (8) liegende Vorsprung (9) der Kontur der Bohrung (3) durch elektrisches Abtragen zumindest im Wesentlichen entfernt und eine Ist-Geometrie der Bohrung (3), die die Realkontur (6) aufweist, an eine Soll-Geometrie der Bohrung (3), die die Idealkontur (8) aufweist, angeglichen wird,
und anschließend mechanische Bearbeitung der mit dem elektrisch abtragenden Bearbeitungsverfahren bearbeiteten Bohrung (3), wobei die hochpräzise Führungsbohrung (4) erzeugt wird, deren Längsachse zumindest weitgehend mit der Sollachse (7) übereinstimmt.

2. Verfahren nach Anspruch 1,
**dadurch gekennzeichnet,**
**dass** das Bearbeiten der Bohrung (3) mit dem elektrisch abtragenden Bearbeitungsverfahren mittels einer Werkzeugelektrode (1) erfolgt und dass eine Längsachse (16) der Werkzeugelektrode (1) bei der Bearbeitung der Bohrung (3) zumindest näherungsweise parallel zu einer Sollachse (7) der Bohrung (3) orientiert wird.

3. Verfahren nach Anspruch 2,
**dadurch gekennzeichnet,**
**dass** die Längsachse (16) der Werkzeugelektrode (1) bei der Bearbeitung der Bohrung (3) zumindest zeitweise zumindest näherungsweise auf der Sollachse (7) der Bohrung (3) liegt.

4. Verfahren nach Anspruch 2 oder 3,
**dadurch gekennzeichnet,**
**dass** die Werkzeugelektrode (1) bei der Bearbeitung der Bohrung (3) zumindest zeitweise entlang ihrer Längsachse (16) in die Bohrung (3) hineingeführt wird und/oder
**dass** die Werkzeugelektrode (1) bei der Bearbeitung der Bohrung (3) zumindest zeitweise entlang ihrer Längsachse (16) aus der Bohrung (3) herausgeführt wird und/oder
**dass** die Werkzeugelektrode (1) bei der Bearbeitung der Bohrung (3) zumindest zeitweise durch die Bohrung (3) hindurchgeführt ist und in zumindest einer Richtung (18, 21) entlang ihrer Längsachse (16) relativ zu der Bohrung (3) verfahren wird.

5. Verfahren nach einem der Ansprüche 2 bis 4,
**dadurch gekennzeichnet,**
**dass** die Werkzeugelektrode (1) bei der Bearbeitung der Bohrung (3) zumindest zeitweise relativ zu der Bohrung (3) zumindest näherungsweise ruht.

6. Verfahren nach Anspruch 5,
**dadurch gekennzeichnet,**
**dass** die Werkzeugelektrode (1) bei der Bearbeitung der Bohrung (3) mit einer oszillierenden Bewegung entlang der Sollachse (7) betätigt wird.

7. Verfahren nach einem der Ansprüche 2 bis 6,
**dadurch gekennzeichnet,**
**dass** die Werkzeugelektrode (1) bei der Bearbeitung der Bohrung (3) zumindest zeitweise mit einer Kreisbewegung (27) um die Sollachse (7) der Bohrung (3) bewegt wird und/oder
**dass** die Werkzeugelektrode (1) bei der Bearbeitung der Bohrung (3) zumindest zeitweise in und/oder entgegen einer Richtung (28, 29, 30) senkrecht zu der Sollachse (7) bewegt wird.

8. Verfahren nach einem der Ansprüche 2 bis 7,
**dadurch gekennzeichnet,**
**dass** bei dem elektrisch abtragenden Bearbeitungsverfahren die Werkzeugelektrode (1) um ihre Längsachse (16) rotiert und/oder das Werkstück (2) um die Sollachse (7) rotiert.

9. Verfahren nach einem der Ansprüche 2 bis 7,
**dadurch gekennzeichnet,**
**dass** die Werkzeugelektrode (1) als Pfeilelektrode (1) ausgestaltet ist oder dass zumindest ein Bearbeitungsabschnitt (17) der Werkzeugelektrode (1), der bei der Bearbeitung in die Bohrung (3) geführt wird, als zylinderförmiger Bearbeitungsabschnitt (17) ausgestaltet ist und dass ein Durchmesser (11) des zylinderförmigen Bearbeitungsabschnitts (17) so groß ausgewählt wird, dass sich der Bearbeitungsabschnitt (17) der Werkzeugelektrode (1) berührungslos in die Bohrung (1) einführen lässt beziehungsweise berührungslos in der Bohrung (3) geführt werden kann.

## Claims

1. Method for producing highly precise guide bores (4) with a predefined ideal contour (8) and a nominal axis (7), which has the following machining steps:
producing a bore (3) in a workpiece (2) by machining, wherein the bore (3) comprises an actual contour (6) with at least one protrusion (9) within the predefined ideal contour (8), and a longitudinal axis which deviates from the nominal axis (7),
machining the bore (3) by an electrical discharge machining method, wherein the at least one protrusion (9), located within the predefined ideal contour (8) of the contour of the bore (3), is at least substantially removed by electrical discharge machining and an actual geometry of the bore (3), which has the actual contour (6), is matched to a nominal geometry of the bore (3), which has the ideal contour (8),
and subsequently, mechanical machining of the bore (3) machined by the electrical discharge machining method, wherein the highly precise guide bore (4) is produced, the longitudinal axis of which coincides at least largely with the nominal axis (7).

2. Method according to Claim 1,
**characterized**
**in that** the machining of the bore (3) by the electrical discharge machining method takes place by means of a tool electrode (1), and in that a longitudinal axis (16) of the tool electrode (1) is oriented at least approximately parallel to a nominal axis (7) of the bore (3) during the machining of the bore (3).

3. Method according to Claim 2,
**characterized**
**in that** the longitudinal axis (16) of the tool electrode (1) at least temporarily lies at least approximately on the nominal axis (7) of the bore (3) during the machining of the bore (3).

4. Method according to Claim 2 or 3,
**characterized**
**in that** the tool electrode (1) is guided at least temporarily into the bore (3) along its longitudinal axis (16) during the machining of the bore (3), and/or in that the tool electrode (1) is guided at least temporarily out of the bore (3) along its longitudinal axis (16) during the machining of the bore (3), and/or
**in that** the tool electrode (1) is guided at least temporarily through the bore (3) during the machining of the bore (3) and is moved in at least one direction (18, 21) along its longitudinal axis (16) relative to the bore (3).

5. Method according to one of Claims 2 to 4,
**characterized**
**in that** the tool electrode (1) at least temporarily rests at least approximately relative to the bore (3) during the machining of the bore (3).

6. Method according to Claim 5,
**characterized**
**in that** the tool electrode (1) is activated so as to carry out an oscillating movement along the nominal axis (7) during the machining of the bore (3).

7. Method according to one of Claims 2 to 6,
**characterized**
**in that** the tool electrode (1) is moved at least temporarily with a circular movement (27) about the nominal axis (7) of the bore (3) during the machining of the bore (3), and/or
**in that** the tool electrode (1) is moved at least temporarily in and/or counter to a direction (28, 29, 30) perpendicular to the nominal axis (7) during the machining of the bore (3).

8. Method according to one of Claims 2 to 7,
**characterized**
**in that**, during the electrical discharge machining method, the tool electrode (1) rotates about its longitudinal axis (16) and/or the workpiece (2) rotates about the nominal axis (7).

9. Method according to one of Claims 2 to 7,
**characterized**
**in that** the tool electrode (1) is configured as an arrow electrode (1), or in that at least one machining portion (17) of the tool electrode (1), said machining portion (17) being guided into the bore (3) during machining, is configured as a cylindrical machining portion (17), and in that a diameter (11) of the cylindrical machining portion (17) is selected to be large enough that the machining portion (17) of the tool electrode (1) can be introduced into the bore (1) in a contactless manner or can be guided in the bore (3) in a contactless manner.

## Revendications

1. Procédé de fabrication d'alésages de guidage (4) de grande précision avec un contour idéal (8) prédéfini et un axe de consigne (7), qui présente les étapes d'usinage suivantes :
production d'un alésage (3) dans une pièce (2) par un usinage avec enlèvement de matière, l'alésage (3) comprenant un contour réel (6) avec au moins une saillie (9) à l'intérieur du contour idéal (8) prédéfini et un axe longitudinal qui diffère de l'axe de consigne (7),
usinage de l'alésage (3) avec un procédé d'usinage par abrasion électrique, la saillie (9) au moins au nombre de un du contour de l'alésage (3) située à l'intérieur du contour idéal (8) prédéfini étant enlevée au moins essentiellement par abrasion électrique, et une géométrie effective de l'alésage (3) qui présente le contour réel (6) étant harmonisée avec une géométrie de consigne de l'alésage (3) qui présente le contour idéal (8),
et ensuite usinage mécanique de l'alésage (3) usiné avec le procédé d'usinage par abrasion électrique, l'alésage de guidage (4) de grande précision dont l'axe longitudinal coïncide au moins largement avec l'axe de consigne (7) étant produit.

2. Procédé selon la revendication 1,
**caractérisé en ce que**
l'usinage de l'alésage (3) avec le procédé d'usinage par abrasion électrique est effectué au moyen d'une électrode-outil (1), et **en ce que**, lors de l'usinage de l'alésage (3), un axe longitudinal (16) de l'électrode-outil (1) est orienté au moins approximativement de façon parallèle à un axe de consigne (7) de l'alésage (3).

3. Procédé selon la revendication 2,
**caractérisé en ce que**,
lors de l'usinage de l'alésage (3), l'axe longitudinal (16) de l'électrode-outil (1) est au moins par moments situé au moins approximativement sur l'axe de consigne (7) de l'alésage (3).

4. Procédé selon la revendication 2 ou 3,
**caractérisé en ce que**,
lors l'usinage de l'alésage (3), l'électrode-outil (1) est introduite dans l'alésage (3) au moins par moments le long de son axe longitudinal (16),
et/ou
lors de l'usinage de l'alésage (3), l'électrode-outil (1) est extraite de l'alésage (3) au moins par moments le long de son axe longitudinal (16),
et/ou,
lors de l'usinage de l'alésage (3), l'électrode-outil (1) est insérée au moins par moments à travers l'alésage (3) et est déplacée dans au moins une direction (18, 21) le long de son axe longitudinal (16) par rapport à l'alésage (3).

5. Procédé selon l'une des revendications 2 à 4,
**caractérisé en ce que**,
lors de l'usinage de l'alésage (3), l'électrode-outil (1) est posée au moins par moments par rapport à l'alésage (3) au moins approximativement.

6. Procédé selon la revendication 5,
**caractérisé en ce que**,
lors de l'usinage de l'alésage (3), l'électrode-outil (1) est actionnée avec un mouvement oscillant le long de l'axe de consigne (7).

7. Procédé selon l'une des revendications 2 à 6,
**caractérisé en ce que**,
lors de l'usinage de l'alésage (3), l'électrode-outil (1) est déplacée au moins par moments avec un mouvement circulaire (27) autour de l'axe de consigne (7) de l'alésage (3) et/ou
**en ce que**, lors de l'usinage de l'alésage (3), l'électrode-outil (1) est déplacée au moins par moments dans et/ou à l'opposé d'une direction (28, 29, 30) perpendiculairement à l'axe de consigne (7).

8. Procédé selon l'une des revendications 2 à 7,
**caractérisé en ce que**,
dans le procédé d'usinage par abrasion électrique, l'électrode-outil (1) tourne autour de son axe longitudinal (16) et/ou la pièce (2) tourne autour de l'axe de consigne (7).

9. Procédé selon l'une des revendications 2 à 7,
**caractérisé en ce que**
l'électrode-outil (1) est constituée en tant qu'électrode en forme de flèche (1) ou **en ce qu'**au moins un segment d'usinage (17) de l'électrode-outil (1) qui est introduit dans l'alésage (3) lors de l'usinage est constitué en tant que segment d'usinage (17) de forme cylindrique, et **en ce qu'**un diamètre (11) du segment d'usinage (17) de forme cylindrique est choisi avec une valeur telle que le segment d'usinage (17) de l'électrode-outil (1) peut être introduit sans contact dans l'alésage (1) ou respectivement peut être guidé sans contact dans l'alésage (3).
